# FASCICULE DE BREVET EUROPEEN

(11) **EP 3 254 550 B1**
(45) Date de publication et mention de la délivrance du brevet: **22.05.2019**
(21) Numéro de dépôt: 17174938.5
(22) Date de dépôt: 08.06.2017
(51) Int. Cl.: A01B 73/04, A01D 34/66

(54) **MACHINE DE COUPE COMPORTANT UN MÉCANISME D'ARTICULATION PERFECTIONNÉ**
MÄHWERK MIT VERBESSERTER GELENKVORRICHTUNG
CUTTING MACHINE HAVING AN IMPROVED ARTICULATION MECHANISM

(30) Priorité: 10.06.2016 FR 1655361
(43) Date de publication de la demande: 13.12.2017
(73) Titulaire: Kuhn S.A., 67700 Saverne (FR)
(72) Inventeur: WALCH, Martin, 67490 DETTWILLER (FR); MAYEUR, Philippe, 57830 BARCHAIN (FR); WOLFF, Michel, 67670 WALTENHEIM SUR ZORN (FR)
(74) Mandataire: Esch, Esther Evelyne

(56) Documents cités:
- WO-A1-97/16957
- DE-A1- 19 534 695
- FR-A1- 2 306 616
- US-A- 4 974 399

## Description

La présente invention se rapporte aux machines agricoles portées, telles que les faucheuses ou les broyeurs d'accotement, dont le groupe d'outils se positionne au transport sensiblement verticalement.

On connait le document FR2306616. Ce document décrit une machine de coupe pourvue d'une structure de liaison et d'un groupe de fauche monté en bout de structure de liaison via une articulation de repliage.

La structure de liaison comporte une poutre porteuse et un ensemble de transmission. Le châssis articulé est monté à l'attelage d'un tracteur.

L'ensemble de transmission présente une poulie menante et une poulie menée, ainsi qu'une courroie de transmission reliant les deux poulies.

Le document WO 97/16957 décrit également une machine de ce type.

L'invention vise à proposer une machine de coupe alternative, simplifiée et allégée.

Ainsi, l'invention porte sur une machine agricole comportant :- une structure de liaison destinée à être montée latéralement à un tracteur, la structure de liaison comportant un support d'attelage, une poutre porteuse et un ensemble de transmission,- l'ensemble de transmission comportant une poulie menante, une poulie menée, un organe de transmission monté à entraînement sur les poulies menante et menée,- un groupe de travail articulé à la poutre porteuse via au moins un axe de repliage, le groupe de travail étant pourvu d'au moins un outil de travail configuré pour être entraîné en rotation depuis l'ensemble de transmission. L'axe de repliage et l'axe de rotation de la poulie menée sont distincts l'un de l'autre.

Grâce à cette caractéristique particulière, les contraintes liées à la transmission et les contraintes liées au repliage sont dissociées et réparties sur deux éléments distincts. Il est ainsi possible d'alléger certaines pièces, de limiter l'épaisseur d'empilement des composants au niveau de l'un ou l'autre de l'axe de repliage ou de l'axe de rotation de la poulie menée. Une machine plus légère est plus facile à manoeuvrer.
Conformément à l'invention, la distance entre les axes de rotation des poulies menante et menée est moindre dans une position de transport que dans une position de travail et/ou que dans une position intermédiaire et/ou l'organe de transmission est détendu en position de transport de la machine agricole. Ceci permet de ménager l'organe de transmission, notamment lorsqu'il s'agit d'une courroie, au transport et au remisage de la machine à l'intersaison lorsque le groupe de travail est laissé de manière durable en une position de remisage relevée analogue à la position de transport. En outre, l'intervention et le remplacement sur l'organe de transmission s'en trouvent facilités. De plus, cette caractéristique présente des avantages en termes de sécurité, la machine étant empêchée de travailler en dehors des angles de fonctionnement souhaités.

Avantageusement, le plan vertical passant par le centre de gravité G du groupe de travail se situe dans l'espace compris entre les plans verticaux passant par l'axe de rotation de la poulie menante et l'axe de repliage lorsque la machine agricole est en position de transport. Cette caractéristique permet une bonne stabilité de la machine au transport, tout en escamotant celle-ci derrière le tracteur. Il est ainsi aisé de respecter la largeur au transport. Avantageusement, le plan vertical passant par le centre de gravité G du groupe de travail se situe hors de l'espace compris entre les plans verticaux passant par l'axe de rotation de la poulie menante et l'axe de repliage lorsque la machine est en position de travail.

Avantageusement, l'axe de repliage est situé en-dessous d'un plan passant par les axes de rotation des poulies menante et menée dans la position de travail.

Avantageusement, un système de tension de l'organe de transmission est disposé dans l'espace situé entre les poulies menante et menée et/ou dans l'espace délimité par l'organe de transmission. Ceci permet d'utiliser avantageusement l'espace intérieur à l'organe de transmission. Le système de tension est ainsi dissimulé sous le capot de l'ensemble de transmission. Le volume de la structure de liaison diminue donc par rapport à l'existant. En outre, cette configuration limite le porte-à-faux que subissent les tiges de pivot des poulies menante et menée. De plus, l'intégration du système de tension entre les poulies permet de l'utiliser pour amortir
le relevage du groupe de fauche. Il n'est alors pas nécessaire de prévoir de dispositif additionnel d'amortissement du relevage du groupe de fauche.

Avantageusement, le système de tension de l'organe de transmission comporte un organe de tension pouvant être un ressort de compression, un bloc de matériau élastomère et/ou élastique ou un vérin. Le système de tension de l'organe de transmission forme donc en plus système d'assistance au dépliage et/ou système d'amorçage au dépliage du groupe de travail, même dans une position de dévers défavorable.

Avantageusement, l'organe de transmission est une courroie ou une chaîne. Dans le cas d'une courroie, la détendre au transport ou au remisage permet d'en assurer la longévité. Une courroie trop lâche risque de patiner ou de glisser avec des conséquences négatives sur la qualité de coupe. La courroie trop lâche peut aussi s'user prématurément. Une tension correcte de la courroie permet d'éviter qu'elle ne patine ou ne glisse. D'autre part, un réglage manuel de la tension de courroie est imprécis quant à la valeur de l'effort réglé. La manipulation de la vis de serrage ne permet pas de connaître - et par conséquent ne permet pas d'ajuster avec précision - la valeur de la tension à laquelle la courroie est soumise. Un système de tension de courroie permet, lui, de connaître précisément l'effort appliqué au niveau des axes des poulies. Ainsi on connait donc plus précisément la tension à laquelle la courroie est soumise.

Avantageusement, le groupe de travail est un groupe de fauche ou un broyeur d'accotement.

D'autres caractéristiques et avantages de l'invention ressortiront de la description ci-après avec référence aux dessins annexés qui représentent, à titre d'exemple non limitatif, plusieurs exemples de réalisation du dispositif d'accouplement selon l'invention.

Sur ces dessins :
- la figure 1 est une vue avant d'une machine agricole en position de travail ayant un groupe de travail, ici un groupe de fauche, et une structure de liaison ;
- la figure 2 est un agrandissement de la structure de liaison telle que représentée en figure 1 ;
- la figure 3 est une vue de dessus de la machine agricole de la figure 1 ;
- la figure 4 est un agrandissement de la structure de liaison telle que représentée en figure 3 ;
- la figure 5 est une vue partielle depuis l'arrière des éléments de la figure 1, en position de travail ;
- la figure 6 est une vue des éléments de la figure 5 en position de passage d'andain ;
- la figure 7 est une vue des éléments de la figure 5 en position de transport ;
- la figure 8 est un agrandissement d'une extrémité de bielle de réglage en position ;
- la figure 9 est un exemple schématisé, en vue de dessous de l'articulation de repliage entre la structure de liaison et le groupe de travail.

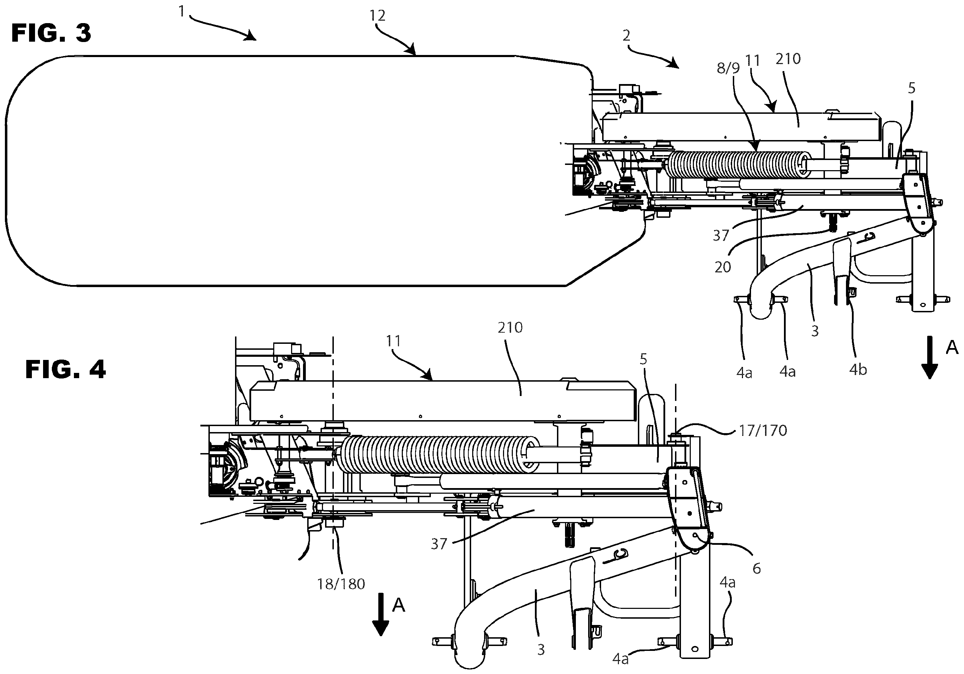

Dans la description qui suit, les notions « au-dessus », « au-dessous », « inférieure » et « supérieure » sont définies par rapport au sol, et les notions « avant », « arrière », « en aval », « gauche » et « droite » sont définies par rapport à la direction d'avancement (A) illustrée en figure 3.

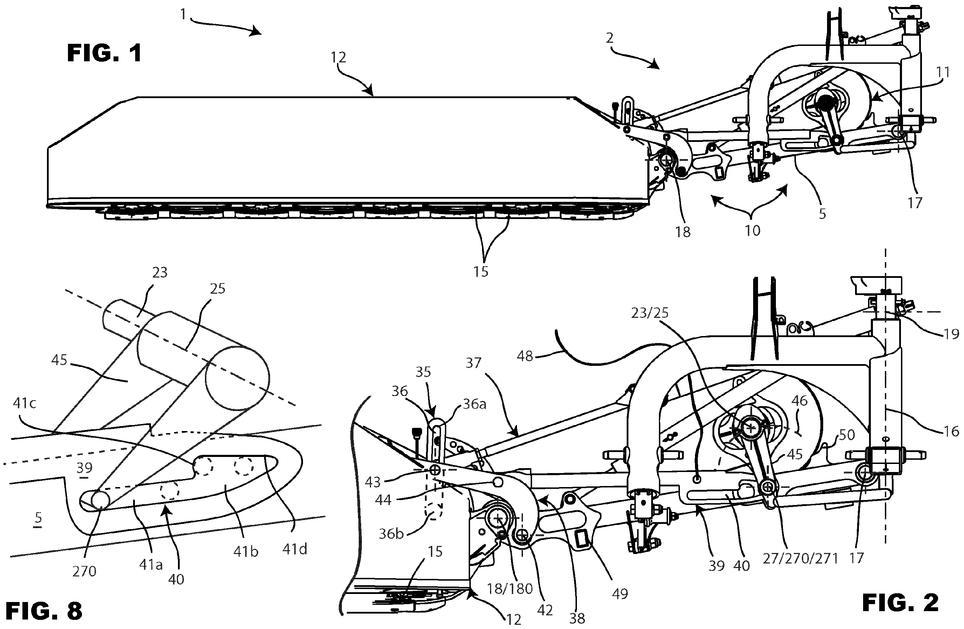

La machine agricole 1 représentée en figure 1 comporte une structure de liaison 2, un ensemble de transmission 11 et un groupe de travail 12.

La machine agricole 1 admet a minima trois positions :
- une position de travail dans laquelle le groupe de travail 12 est à proximité du sol et/ou parallèle à celui-ci,
- une position de transport dans laquelle le groupe de travail 12 est relevé à la verticale ou à quelques degrés de celle-ci pour transport sur route, préférentiellement entre 80 et 120 degrés depuis une position de travail à l'horizontale, et,
- une position intermédiaire entre les deux précédentes dans laquelle le groupe de travail 12 est décollé du sol sans être tout à fait relevé comme en position de transport.

Lorsque la machine 1 est une machine de coupe, la position intermédiaire du groupe de travail 12 est par exemple une position de passage d'andain.

La structure de liaison 2 comporte notamment un support d'attelage 3 et un étançon 5. La structure de liaison 2 comporte encore un mécanisme d'allégement 8 (figure 3) et un mécanisme de repliage 10 (figure 1).

Le support d'attelage 3 peut être monté au moyen de tourillons 4a et d'un organe d'accrochage haut 4b (figure 4) sur un attelage trois points d'un tracteur (tracteur et attelage trois points de tracteur non représentés ici). Le support d'attelage 3 se présente, par exemple, sous la forme d'une structure mécano-soudée.

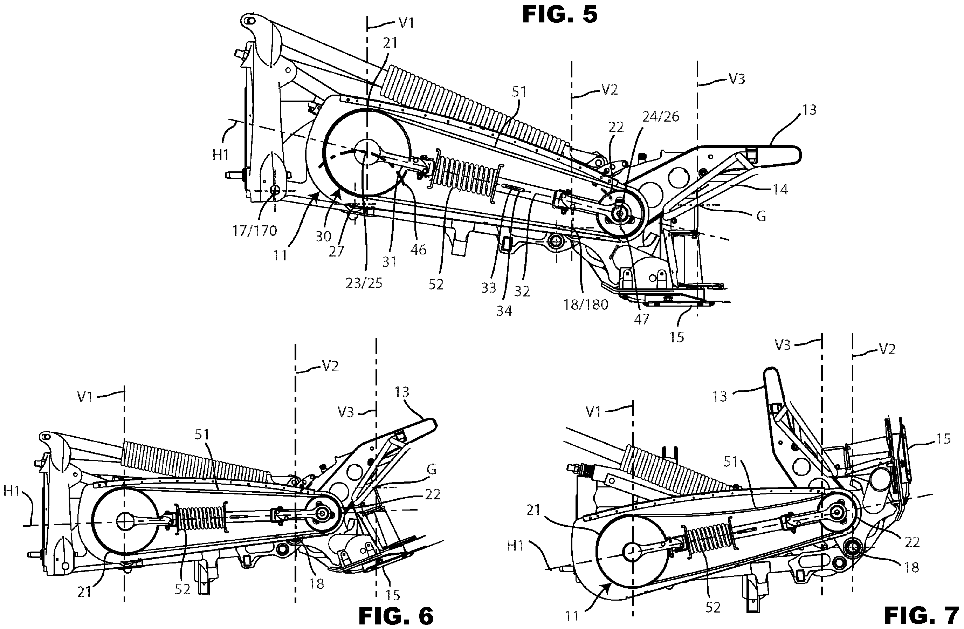

L'étançon 5, aussi appelé poutre porteuse, est lié au support d'attelage 3, préférentiellement de manière articulée ou éventuellement de manière rigide. Dans le mode de réalisation représenté, l'étançon 5 est articulé par rapport au support d'attelage 3 au moyen d'une articulation 16 d'axe sensiblement vertical, mais qui pourrait aussi être inclinée vers l'avant ou vers l'arrière. Au travail, l'étançon 5 s'étend transversalement, par exemple mais non limitativement perpendiculairement, à la direction d'avancement (A). En outre, l'étançon 5 est articulé par rapport au support d'attelage 3 par une première articulation de repliage 17 ici d'axe sensiblement horizontal 170, ou premier axe de repliage. L'axe 170 peut alternativement être incliné de quelques degrés par rapport à l'horizontale. Un limiteur non détaillé ici limite en butée la course de l'étançon 5 autour de l'axe 170 vers le haut et vers le bas. Par exemple, non limitativement, l'étançon 5 est en butée haute dans la position illustrée en figure 7.

L'étançon 5 présente une première butée 49 et une deuxième butée 50 appelée berceau 50. Les butées 49 et 50 sont d'une pièce avec le reste de l'étançon 5, par exemple soudées ou formées de corps avec celui-ci.

Le mécanisme d'allégement 8 présente notamment un élément élastique, ou élément de tension, ici un ressort de traction 9 (figures 3-4), dont les caractéristiques lui permettent de limiter les pressions au sol du groupe de travail 12, par exemple sur l'herbe dans le cas d'une machine de coupe. Le ressort 9 peut être remplacé ou complété par un vérin qui peut être autonome ou contrôlé hydrauliquement depuis le tracteur.

Le mécanisme de repliage 10 comporte un levier 35, un vérin de levage 37, une bielle boomerang 38, une bielle de réglage en position 39 (figure 2).

Le levier 35 est pourvu d'un orifice oblong 36 présentant une surface de fond 36a formant butée opposée au point d'attache 36b du levier sur la poutre intermédiaire 13 (figure 2).

La bielle boomerang 38 est une pièce recourbée montée à rotation sur l'étançon 5 par une articulation inférieure 42. La bielle 38 comporte encore une articulation supérieure 43 comportant une tige apte à coulisser dans l'orifice oblong 36.

La bielle 38 peut être relevée par pivotement autour de son articulation inférieure 42 jusqu'à venir en contact contre la butée 49.

Le vérin de levage 37 est ici un vérin simple effet. Le vérin 37 est monté côté support d'attelage sur un axe supérieur 19 grâce auquel il peut pivoter dans un plan vertical (figure 2). Le vérin 37 est encore relié à la bielle boomerang 38 par l'articulation 43. L'actionnement du vérin 37 par injection d'huile permet son raccourcissement.

Un dispositif de réglage en position qui est ici la bielle 39 est encore monté à rotation sur la bielle boomerang 38 en une articulation 44, entre les articulations inférieure 42 et supérieure 43.

La bielle 39 présente un orifice allongé 40 en forme de P (figures 2 et 8). L'orifice 40 présente un couloir 41a allongé, un vestibule 41b plus large que le couloir 41a, une surface transversale 41c et une surface supérieure 41d.

La surface 41c appartient au pourtour du vestibule 41b et est transversale au couloir 41a. Tel qu'il sera décrit plus loin, la surface 41c forme butée de passage d'andain, tandis que la surface supérieure 41d joue un rôle de profil de came.

Une commande d'actionnement 48 est reliée à la bielle 39. Dans l'exemple représenté, il s'agit d'une corde accessible depuis la cabine. Il peut encore s'agir d'un câble ou d'un système automatisé. La commande d'actionnement 48 permet lorsque nécessaire de relever la bielle 39 avant un changement de position de la machine 1.

Le dispositif de réglage en position peut prendre d'autres formes que la bielle 39, par exemple comporter une tige ayant une surface d'extrémité formant butée, un support solidaire de l'étançon 5, la tige reposant sur ce support lorsque la commande d'actionnement est au repos et coulissant sur le support lorsque le groupe de travail évolue dans un plan vertical.

Le groupe de travail 12 comporte des outils de travail 15 (figure 1). Dans l'exemple représenté sur les figures, le groupe de travail 12 est un groupe de fauche et les outils sont pourvus en particulier de lames de coupe pour la récolte de fourrage.

Le groupe de travail 12 présente ici une poutre intermédiaire 13 (figure 5) qui peut pivoter verticalement par rapport à l'étançon 5 autour d'une deuxième articulation de repliage 18, ici d'axe 180 sensiblement horizontal. La poutre intermédiaire 13 sert par exemple de point d'accroche à la barre de coupe portant les lames 15, et à une structure porteuse 14.

L'ensemble de transmission 11 est un système chargé de l'entraînement des outils du groupe de travail 12 depuis un arbre de transmission du tracteur.

L'ensemble de transmission 11 comporte une poulie menante 21 et une poulie menée 22, ainsi qu'un organe de transmission. L'organe de transmission est ici une courroie de transmission 51 reliant les deux poulies (figure 5). Alternativement, l'organe de transmission est une chaîne.

L'ensemble de transmission 11 est par ailleurs pourvu d'un système de tension 30 de l'organe de transmission comportant un organe de tension 52, une tige 31 et un fourreau 32 accueillant la tige 31 (figure 5). La tige 31 et le fourreau 32 peuvent coulisser en translation l'un par rapport à l'autre. La tige 31 et le fourreau 32 présentent en outre un système de retenue, ici respectivement un pion 33 et une rainure 34, empêchant le catapultage de la tige 31 et du fourreau 32 sous l'effet de l'organe de tension 52 lors du démontage de l'ensemble de transmission 11.

Dans l'exemple représenté aux figures 1 à 7, l'organe de tension 52 est un ressort de compression. En variante, l'organe de tension peut être différent, par exemple comporter un bloc de matériau élastomère et/ou élastique tel que le polyuréthane, un vérin qui peut être non limitativement à simple ou double effet, à ressort ou à gaz, etc.

La poulie menante 21 est entraînée par un arbre moteur 20 (figure 3), lui-même relié à une prise de force du tracteur par un arbre intermédiaire et un système de joints de Cardan (non représentés).

La poulie menée 22 transmet l'entraînement en direction du groupe de travail.

La poulie 21 est montée sur un pivot 23 qui est non seulement mobile à rotation autour de son axe propre 25 mais peut également suivre une trajectoire 46 en arc de cercle autour d'une articulation distincte 27 d'axe 271 parallèle à l'axe 25 (voir figure 2). Le pivot 23 est montée dans un palier 45 en forme de U ou d'arceau dont les extrémités sont disposées de part et d'autre de l'étançon 5. Le pivot 23 peut alors suivre une trajectoire en arc de cercle 46 centrée sur l'axe 271. Le palier 45 peut ainsi être appelé palier pivotant.

L'articulation 27 comporte une tige 270 montée sur l'étançon 5. Une extrémité de la tige 270 est logée dans l'orifice allongé 40. La surface intérieure de l'orifice 40 forme alors profil de came tandis que la tige 270 joue le rôle de suiveur. En pratique, c'est la bielle 39 qui est mobile par rapport à la tige 270. En variante non représentée, la tige 270 est substituée par un support distinct monté sur l'étançon 5.

La poulie 22 est quant à elle montée sur une tige 24 ou pivot montée mobile à rotation dans la poutre intermédiaire 13. La tige 24 est mobile à rotation autour de son axe propre 26 et peut suivre une trajectoire 47 en arc de cercle autour de la deuxième articulation de repliage 18 (voir figure 5).

L'ensemble de transmission 11 intègre préférentiellement un capot de protection 210 (figure 3).

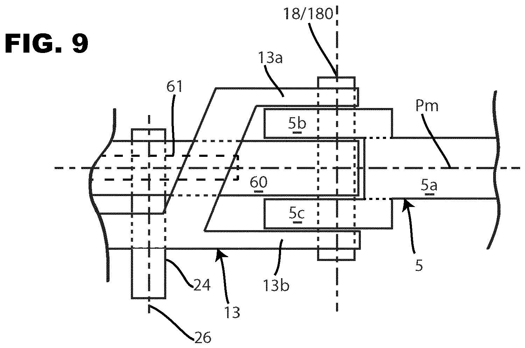

La figure 9 illustre un détail en vue de dessous d'un arrangement possible entre la poutre intermédiaire 13 et un carter 60 du groupe de travail 12, et l'étançon 5.

L'étançon 5 peut comporter une portion principale 5a à l'extrémité de laquelle deux brides 5b et 5c sont fixées.

Le carter 60 est un boîtier dans lequel une série de pignons d'entraînement 61 est logée, ceux-ci transmettant l'entraînement vers les outils 15. Dans le mode de réalisation illustré, le carter 60 est logé centré entre les brides 5b et 5c. Un seul pignon 61 est représenté en figure 9, les autres étant disposés dans le carter 60, à l'opposé de l'articulation 18.

La poutre intermédiaire 13 peut quant à elle comporter une fourche d'extrémité pourvue de branches 13a et 13b.

Ici, préférentiellement mais non limitativement, le carter 60 peut être en matériau léger tel que l'aluminium, tandis que l'étançon 5 et la poutre intermédiaire 13 sont en acier.

L'assemblage de la poutre 13, du carter 60 et de l'étançon 5 peut se faire de la manière suivante :
- l'une des brides 5b et 5c est fixée à la portion principale 5a, par exemple par vissage ou par soudage ;
- le carter 60 est disposé contre la bride 5b ou 5c qui vient d'être fixée à la portion 5a ;
- l'autre bride 5b ou 5c est fixée contre la portion 5a, par exemple par vissage, le carter 60 étant alors pris en sandwich entre les brides 5b et 5c ;
- la poutre intermédiaire 13 est disposée autour de l'extrémité de l'étançon 5 avec les branches 13a et 13b de part et d'autre des brides 5b et 5c ;
- la tige de l'articulation 18 est insérée dans les orifices alignés des pièces 5, 13 et 60 pour articuler la poutre 13 et le carter 60 par rapport à l'étançon 5.

La tige 24 peut avoir été montée dans le carter 60 au préalable en même temps que la série de pignons 61. Le reste de l'ensemble de transmission 11 peut alors être mis en place contre l'étançon 5.

La machine 1 décrite ci-dessus présente plusieurs avantages par rapport à l'art antérieur. La dissociation des fonctions repliage (articulation 18) et entraînement (tige 24) permet de répartir sur deux tiges distinctes (l'axe de l'articulation 18 et la tige 24) les contraintes qui s'exerçaient auparavant sur une articulation unique. Grâce à des contraintes moindres, il est possible d'alléger certaines pièces, par exemple en fabriquant le carter 60 en aluminium. Il en résulte un gain de plusieurs dizaines de kilogrammes. En montant la poulie menée 22 sur une tige 24 distincte de l'articulation 18, il est possible de rapprocher la poulie 22 du centre de gravité de la machine 1, par lequel passe par exemple un plan longitudinal Pm (figure 9). Les contraintes de flexion (c'est-à-dire le porte-à-faux ou le bras de levier) subies par le pivot de la poulie 22, et les contraintes de torsion subies par l'étançon 5 sont ainsi réduites. En outre, il est possible de réduire le nombre de pièces empilées en largeur et la largeur de celles-ci et donc d'alléger encore la machine 1.

Trois plans verticaux V1, V2 et V3 sont définis pour décrire la machine agricole 1 (voir figure 5).

Le plan vertical V1 passe par l'axe de rotation de la poulie menante 25.

Le plan vertical V2 passe par le deuxième axe de repliage 180.

Le plan vertical V3 passe le centre de gravité G du groupe de travail 12 (figures 5 et 7).

La qualification de « vertical » des plans V1, V2 et V3 s'entend par rapport à un sol plan horizontal.

Dans le mode de réalisation représenté en figures 5 à 7 :
- dans la position de travail et dans la position intermédiaire, le plan vertical V3 se situe hors de l'espace entre les plans V1 et V2 ;
- dans la position de transport, le plan vertical V3 se situe dans l'espace entre les plans V1 et V2.

Pour passer de la position de travail (figure 5) à la position de passage d'andain (figure 6) ou à la position de transport (figure 7), le vérin 37 est actionné.

Au travail, le groupe de travail 12 est abaissé, et repose par exemple sur le sol dans le cas d'une faucheuse à lames. Le groupe de travail 12 et la structure de liaison 2 sont susceptibles de subir un débattement pour suivre le profil du terrain sur la longueur du groupe de fauche. Le groupe de travail 12 évolue alors en rotation autour des axes de repliage 170 et 180. Lors de ce débattement, l'articulation 43 coulisse dans l'orifice oblong 36 du levier 35 (figure 2).

On décrit ci-après le passage de la position de travail à la position intermédiaire.

L'actionnement du vérin 37 permet dans une première étape de rattraper le jeu dû au débattement et qui subsiste entre la structure de liaison 2 et le groupe de travail 12. La rétractation du vérin 37 provoque le pivotement de la bielle boomerang 38 autour de l'articulation 42, et le pivotement du levier 35 autour de son point d'attache 36b. L'articulation 43 vient en contact contre la butée 36a.

Par son poids propre, la bielle de réglage en position 39 repose normalement sur la tige 270 en position de travail et en position intermédiaire. Le pivotement de la bielle 38 fait donc coulisser la bielle 39 par rapport à la tige 270.

Au cours d'une deuxième étape, alors que l'articulation 43 se trouve contre la butée 36a, la bielle 38 continue de pivoter autour de l'articulation 42 tandis que le groupe de travail 12 pivote autour de l'axe de repliage 180, entraîné par le levier 35. En fin de deuxième étape, la tige 270 vient en contact contre la butée 41c. Le pivotement du groupe de travail 12 autour de l'articulation 18 est alors interrompu.

La rétractation du vérin 37 se poursuit au cours d'une troisième étape au cours de laquelle le groupe de travail 12 et l'étançon 5 pivotent autour du premier axe de repliage 170. Ce mouvement est interrompu par une butée mécanique qui désactive l'alimentation en huile du vérin 37 en y maintenant la pression hydraulique. La machine 1 se trouve alors en position de passage d'andain (figure 6).

On décrit à présent le passage de la position de travail à la position de transport.

Le passage en position de transport se fait par exemple en actionnant la commande 48 qui soulève la bielle 39. L'actionnement de la commande 48 peut généralement intervenir à tout moment en début de course de vérin 37, avant que la surface 41c ne vienne en contact contre la tige 270. L'étape éventuelle de rattrapage de jeu est identique sur le principe à celle décrite précédemment.

Au cours d'une deuxième étape, la rétractation du vérin 37 permet à la bielle 38 de continuer de pivoter autour de l'articulation 42. Le soulèvement de la bielle 39 permet à la tige 270 de s'engager dans le couloir 41a en évitant la surface 41c. La bielle 39 peut alors continuer à coulisser par rapport à la tige 270, au-delà de la surface de butée 41c. Faute pour la surface 41c d'être arrêtée par la tige 270, le groupe de travail 12 continue de pivoter autour de l'axe de repliage 180 jusqu'à une position sensiblement verticale, préférentiellement au-delà du plan vertical V2 passant par l'axe de repliage 180.

Au cours du relevage, les pivots 23 et 24 sont amenés à se déplacer autour de l'articulation respective 27 et 18. Le pivot 23 suit alors la trajectoire en arc de cercle 46 et le pivot 24 la trajectoire 47 (figure 5). Le pivot 23 vient en butée contre le berceau 50 (figure 2). Le vérin 37 continue à se rétracter alors que la tige du pivot 23 se maintient en butée. La course du pivot 24 se poursuit tandis que la courroie 51 se détend. Le système de tension 30 et son ressort de compression 52 se compriment alors. La course du pivot 24 est interrompue lorsque la bielle boomerang 38 vient en contact contre la butée 49 et que la poutre intermédiaire 13 ne peut plus pivoter autour de l'axe de repliage 180. L'étançon 5 pivote alors autour de l'axe 170. Le groupe de travail 12 a alors atteint la position de transport et l'organe de transmission 51 est détendu (figure 7). Pour bloquer la machine en position de transport, il convient ici de bloquer le vérin 37 pour l'empêcher de se déployer. Un verrou est alors mis en oeuvre. Le verrou prend par exemple la forme d'un crochet monté sur le corps du vérin 37 et que l'on engage contre un pion solidaire de la tige de vérin, par exemple sur la chape d'extrémité du vérin.

Pour faire redescendre le groupe de travail 12 depuis la position de transport, il suffit de désengager le verrou et d'ouvrir le circuit d'huile du vérin 37. L'huile peut alors s'échapper du vérin 37 et le vérin peut s'allonger.

Dans le mode de réalisation représenté, l'étançon 5 s'abaisse en pivotant autour de l'axe de repliage 170. Le limiteur arrête le mouvement de l'étançon 5 vers le bas.

L'énergie du ressort 52 comprimé repousse le centre de gravité G du groupe de travail 12 (ou le plan V3) au-delà du plan vertical V2. Le ressort 52 assiste donc le groupe de travail 12 dans son déplacement depuis la position de transport vers sa position de travail. L'organe de tension 52 forme donc avantageusement organe d'aide au dépliage en plus de son rôle d'organe de tension à proprement parler. Une fois le groupe de travail 12 au-delà du plan vertical V2, son poids propre le fait descendre jusqu'à la position de travail.

Le diamètre d'échappement de l'huile du vérin 37 est choisi pour réguler automatiquement la descente du groupe de travail 12 sous l'action du poids propre du groupe de travail 12.

Il est bien évident que l'invention n'est pas limitée aux variantes de réalisation décrites ci-dessus et représentées sur les figures annexées. Des modifications restent possibles, notamment en ce qui concerne la constitution ou le nombre des divers éléments ou par substitution d'équivalents techniques, sans pour autant sortir du domaine de protection.

Le système de tension 30 peut comporter un galet additionnel pour tendre l'organe de transmission.

La structure de liaison telle que décrite ci-dessus peut également être mise en oeuvre dans d'autres types de machines agricoles telles que par exemple les faucheuses à tambour ou les broyeurs d'accotement, auquel cas, le groupe de travail comporte des outils différents des lames de coupe du groupe de fauche décrit précédemment. Les outils de broyeurs peuvent par exemple être des dents montées sur un tambour d'axe transversal à la direction d'avance A de la machine et être individuellement montées sur des axes parallèles à l'axe général du tambour.

En outre, la machine peut comporter différents organes et articulations pour le suivi de terrain et l'évitement d'obstacle (non représentés ici).

## Revendications

1. Machine agricole comportant :
- une structure de liaison (2) destinée à être attelée à un tracteur, la structure de liaison (2) comportant un support d'attelage (3), une poutre porteuse (5) et un ensemble de transmission (11),
- l'ensemble de transmission (11) comportant une poulie menante (21), une poulie menée (22), un organe de transmission (51) monté à entraînement sur les poulies menante et menée,
- un groupe de travail (12) articulé à la poutre porteuse (5) via au moins un axe de repliage (180), le groupe de travail (12) étant pourvu d'au moins un outil de travail (15) configuré pour être entraîné en rotation depuis l'ensemble de transmission (11),
l'axe de repliage (180) et l'axe de rotation (26) de la poulie menée (22) étant distincts l'un de l'autre,
***caractérisée en ce que*** la distance entre les axes de rotation (25, 26) des poulies menante (21) et menée (22) est moindre dans une position de transport que dans une position de travail et/ou que dans une position intermédiaire.

2. Machine agricole selon la revendication précédente, le plan vertical (V3) passant par le centre de gravité (G) du groupe de travail (12) se situant dans l'espace compris entre les plans verticaux (V1, V2) passant respectivement par l'axe de rotation (25) de la poulie menante (21) et l'axe de repliage (180) lorsque la machine agricole est en position de transport.

3. Machine agricole selon l'une des revendications précédentes, le plan vertical (V3) passant par le centre de gravité (G) du groupe de travail (12) se situant hors de l'espace compris entre les plans verticaux (V1, V2) passant respectivement par l'axe de rotation (25) de la poulie menante (21) et l'axe de repliage (180) lorsque la machine est en position de travail.

4. Machine agricole selon l'une des revendications précédentes, l'organe de transmission (51) étant détendu en position de transport de la machine agricole.

5. Machine agricole selon l'une des revendications précédentes, l'organe de transmission (51) étant une courroie ou une chaîne.

6. Machine agricole selon l'une des revendications précédentes, l'axe de repliage étant situé en-dessous d'un plan (H1) passant par les axes de rotation (25, 26) des poulies menante (21) et menée (22) dans la position de travail.

7. Machine agricole selon l'une des revendications précédentes, un système de tension (30) de l'organe de transmission (51) étant disposé dans l'espace situé entre les poulies menante (21) et menée (22) et/ou dans l'espace délimité par l'organe de transmission (51).

8. Machine agricole selon la revendication précédente, le système de tension (30) de l'organe de transmission (51) comportant un organe de tension (52) pouvant être un ressort de compression, un bloc de matériau élastomère et/ou élastique ou un vérin.

9. Machine agricole selon l'une des revendications précédentes, le groupe de travail (12) étant un groupe de fauche ou un broyeur d'accotement.

## Patentansprüche

1. Landwirtschaftliche Maschine mit
- einer Verbindungsvorrichtung (2), die dazu bestimmt ist, an einen Schlepper gekuppelt zu werden, wobei die Verbindungsvorrichtung (2) eine Kupplungsauflage (3), einen Tragbalken (5) und eine Übertragungseinheit (11) umfasst,
- der Übertragungseinheit (11) mit einer Antriebsscheibe (21), einer angetriebenen Scheibe (22), einem Übertragungselement (51), das antreibbar auf der Antriebsscheibe und der angetriebenen Scheibe angebracht ist,
- einer Arbeitseinheit (12), die an dem Tragbalken (5) über mindestens eine Zusammenklappachse (180) angelenkt ist, wobei die Arbeitseinheit (12) mit mindestens einem Arbeitswerkzeug (15) ausgestattet ist, das ausgestaltet ist, ausgehend von der Übertragungseinheit (11) in Drehung versetzt zu werden,
wobei die Zusammenklappachse (180) und die Drehachse (26) der angetriebenen Scheibe (22) voneinander verschieden sind,
***dadurch gekennzeichnet*, dass** der Abstand zwischen den Drehachsen (25, 26) der Antriebsscheibe (21) und der angetriebenen Scheibe (22) in einer Transportposition geringer ist als in einer Arbeitsposition und/oder einer Zwischenposition.

2. Landwirtschaftliche Maschine nach dem vorhergehenden Anspruch, wobei die Vertikalebene (V3), die den Schwerpunkt (G) der Arbeitseinheit (12) durchquert, sich in dem Raum zwischen den Vertikalebenen (V1, V2) erstreckt, die jeweils durch die Drehachse (25) der Antriebsscheibe (21) und die Zusammenklappachse (180) verlaufen, wenn sich die landwirtschaftliche Maschine in Transportposition befindet.

3. Landwirtschaftliche Maschine nach einem der vorhergehenden Ansprüche, wobei die Vertikalebene (V3), die den Schwerpunkt (G) der Arbeitseinheit (12) durchquert, sich ausser dem Raum zwischen den Vertikalebenen (V1, V2) erstreckt, die jeweils durch die Drehachse (25) der Antriebsscheibe (21) und die Zusammenklappachse (180) verlaufen, wenn sich die Maschine in Arbeitsposition befindet.

4. Landwirtschaftliche Maschine nach einem der vorhergehenden Ansprüche, wobei das Übertragungselement (51) in der Transportstellung der landwirtschaftlichen Maschine entspannt ist.

5. Landwirtschaftliche Maschine nach einem der vorhergehenden Ansprüche, wobei das Übertragungselement (51) ein Riemen oder eine Kette ist.

6. Landwirtschaftliche Maschine nach einem der vorhergehenden Ansprüche, wobei die Zusammenklappachse (180) unter einer Ebene (H1) liegt, die in der Arbeitposition durch die Drehachsen (25, 26) der Antriebsscheibe (21) und der angetriebenen Scheibe (22) verläuft.

7. Landwirtschaftliche Maschine nach einem der vorhergehenden Ansprüche, wobei ein Spannungssystem (30) des Übertragungselementes (51) in dem Raum zwischen der Antriebsscheibe (21) und der angetriebenen Scheibe (22) und/oder in dem durch das Übertragungselement (51) begrenzten Raum, angebracht ist.

8. Landwirtschaftliche Maschine nach dem vorhergehenden Anspruch, wobei das Spannungssystem (30) des Übertragungselementes (51) ein Spannungsorgan (52) umfasst, welches eine Druckfeder, ein Elaststoffblock und/oder ein Gummiblock oder ein Zylinder sein kann.

9. Landwirtschaftliche Maschine nach einem der vorhergehenden Ansprüche, wobei die Arbeitseinheit (12) eine Mäheinheit oder ein Böschungsmäher ist.

## Claims

1. Agricultural machine including:
- a connecting structure (2) intended to be hitched to a tractor, the connecting structure (2) including a coupling support (3), a carrier beam (5) and a transmission unit (11),
- the transmission unit (11) including a driving pulley (21), a driven pulley (22), a transmission element (51) drive-mounted on the driving and driven pulleys,
- a work unit (12) articulated to the carrier beam (5) via at least one folding axis (180), the work unit (12) being fitted with at least one work tool (15) configured to be driven in rotation from the transmission unit (11),
the folding axis (180) and the rotation axis (26) of the driven pulley (22) being separate from each other,
***characterized in* that** the distance between the rotation axes (25, 26) of the driving (21) and driven (22) pulleys is less in a transport position than in a work position and/or an intermediate position.

2. Agricultural machine according to the previous claim, the vertical plane (V3) passing through the centre of gravity (G) of the work unit (12) lying in the space between the vertical planes (V1, V2) passing respectively through the rotation axis (25) of the driving pulley (21) and the folding axis (180) when the agricultural machine is in a transport position.

3. Agricultural machine according to one of the previous claims, the vertical plane (V3) passing through the centre of gravity (G) of the work unit (12) lying outside the space between the vertical planes (V1, V2) passing respectively through the rotation axis (25) of the driving pulley (21) and the folding axis (180) when the machine is in a work position.

4. Agricultural machine according to one of the previous claims, the transmission element (51) being slackened in the transport position of the agricultural machine.

5. Agricultural machine according to one of the previous claims, the transmission element (51) being a belt or a chain.

6. Agricultural machine according to one of the previous claims, the folding axis being situated below a plane (H1) passing through the rotation axes (25, 26) of the driving (21) and driven (22) pulleys in the work position.

7. Agricultural machine according to one of the previous claims, a transmission element (51) tensioning system (30) being positioned in the space between the driving (21) and driven (22) pulleys and/or in the space defined by the transmission element (51).

8. Agricultural machine according to the previous claim, the transmission element (51) tensioning system (30) including a tensioning element (52) that can be a compression spring, an elastomeric material and/or elastic pad or a cylinder.

9. Agricultural machine according to one of the previous claims, the work unit (12) being a mower unit or a roadside shredder.
